# EUROPEAN PATENT SPECIFICATION

(11) **EP 0 745 258 B1**
(45) Date of publication and mention of the grant of the patent: **25.08.1999**
(21) Application number: 94919956.6
(22) Date of filing: 22.06.1994
(51) Int. Cl.: G21C 3/07, C22C 16/00, C22F 1/18

(54) **A NUCLEAR FUEL ELEMENT FOR A PRESSURIZED WATER REACTOR AND A METHOD FOR MANUFACTURING THE SAME**
KERNREAKTORBRENNSTABBÜNDEL FÜR DRUCKWASSERREAKTOR UND VERFAHREN ZU SEINER HERSTELLUNG
ELEMENT COMBUSTIBLE NUCLEAIRE POUR REACTEUR A EAU PRESSURISEE ET SON PROCEDE DE PRODUCTION

(30) Priority: 23.06.1993 SE 9302172
(43) Date of publication of application: 04.12.1996
(73) Proprietor: ABB ATOM AB, S-721 83 Västeras (SE)
(72) Inventor: RUDLING, Peter, S-724 60 Västeras (SE)
(74) Representative: Dahlstrand, Björn
(86) International application number: SE9400619
(87) International publication number: WO9500955

(56) References cited:
- EP-A- 0 196 286
- EP-A- 0 446 924
- EP-A- 0 498 259
- EP-A- 0 538 778
- FR-A- 2 672 057

## Description

### TECHNICAL FIELD

The present invention relates to a method for manufacturing a nuclear fuel element for a pressurized-water reactor, PWR. The fuel element comprises cladding tubes and guide tubes, the composition and manufacture of which are so adapted that the cladding and the guide tubes during reactor operation show good resistance to general corrosion and a low hydrogen absorption.

### BACKGROUND ART, PROBLEMS

Fuel elements for pressurized-water reactors comprise a number of fuel rods arranged in a square lattice in a frame comprising guide tubes, top tie plate, bottom tie plate and spacers. The fuel rods comprise cladding tubes inside of which the nuclear fuel is enclosed. It is of extreme importance that thick or flaking oxide layers do not build up on the cladding tubes during reactor operation, so that the thermal conduction through the cladding is influenced or that radioactive oxide flakes spread in the reactor systems. It is also of importance that thick oxide layers do not build up on the guide tubes. The hydrogen which is generated during oxidation of zirconium should not be absorbed to any major extent by the cladding or the guide tubes since this hydrogen, which is precipitated in the form of zirconium hydride, may cause a considerable reduction of the mechanical strength of the cladding and the guide tubes. It is known to influence the composition and manufacture of the cladding tube in order thus to improve the corrosion properties of the nuclear fuel element.

In, for example, EP 196 286, a method is described for manufacturing a cladding tube with improved corrosion properties for pressurized-water reactors. The cladding tube consists of a zirconium alloy with alloying additives of 1 to 5 % from the group Sn, Fe, Cr and Ni. To improve the corrosion properties of the tube and to achieve equilibrium in the zirconium alloy between secondary phases and matrix such that a minimum of iron is in solid solution, it is described that the tube during manufacture, after extrusion of the tube blank has been carried out, is to be heat-treated between the cold-rolling stages at a temperature in the interval 650°C to 790°C. The time for the heat-treatments is determined by the desire that the cumulative annealing parameter of the material shall exceed a certain value. The annealing parameter is calculated according to A = t exp (-Q/RT), where t = annealing time in hours, Q = the activation energy in cal/mole, T = the temperature in K, and R is the general gas constant. According to the patent specification, the annealing parameter A shall exceed 2.3 10⁻¹⁴ (the activation energy estimated at 65000 cal/mole), which means that the annealing time at 700°C shall be at least 10.3 h. To obtain an additional precipitation of the secondary phase, an extra heat treatment at 540-650°C can be introduced before the last rolling stage.

The literature contains a large number of publications describing different ways of calculating the A-parameter and different ways of determining the activation energy. According to "Microstructure and Corrosion Studies for Optimized PWR and BWR Zircaloy Cladding", ASTM STP 1023, the tendency to corrosion of a PWR cladding is correlated by a cumulative annealing parameter. Figures 7 and 8 show that the corrosion properties are better for claddings manufactured with a high cumulative annealing parameter. An optimum value of the cumulative annealing parameter is given as 10⁻¹⁷ h, which corresponds to an annealing time of 7.1 h at 700°C (Q/R = 40 000 K). According to "Behaviour of Structural Materials For Fuel and Control Elements in Light Water Cooled Reactors", IAEA Symposium on Improvements in Water Reactor Fuel Technology and Utilization, a cladding tube for PWR fuel is to be heat-treated at a temperature exceeding 700°C on at least one annealing occasion for obtaining good corrosion properties.

According to EP 296 972, a cladding tube for pressurized-water reactors is to be manufactured of zirconium alloy and preferably of Zircaloy-4, and as a last stage in the manufacture the cladding is to undergo a so-called beta-quenching when the tube is heated to a temperature in the interval 950° to 1250°C and thereafter rapidly cooled.

However, it has proved that a PWR cladding which is heat-treated in such a way that it has obtained a high A parameter has a high hydrogen absorption fraction, i.e. of the hydrogen which is formed during the corrosion process a large percentage will be absorbed by the cladding, which leads to an embrittlement of the cladding.

### SUMMARY OF THE INVENTION

According to the present invention, a method for manufacturing a fuel element for a PWR is obtained, the cladding of which has good corrosion resistance and low hydrogen absorption. Also the guide tubes of the fuel element can be designed, according to the present invention, so as to attain good corrosion resistance and low hydrogen absorption.

### The invention is defined in the claims.

It has proved that a PWR cladding with good corrosion resistance and low hydrogen absorption can be obtained by manufacturing the cladding tube of Zircaloy-2 or a zirconium alloy based on Zircaloy-2. The composition of Zircaloy-2 is 1.2 - 1.7 per cent by weight (in the following "%") Sn, 0.07 - 0.20 % Fe, 0.05 - 0.15 % Cr, 0.03 - 0.08 % Ni, and O.090.16 % O. Other suitable zirconium alloys are 1 - 2.0 % Sn, 0.07 - 0.70 % Fe, 0.05 - 0.15 % Cr, 0.06 - 0.40 % Ni, 0.015 - 0.20 % Nb, 0.09 - 0.16 % O, or an alloy with zirconium and 1 - 2.0 % Sn, 0.07 - 0.70 % Fe, 0.05 - 0.15 % Cr, 0.160.40 % Ni, 0.015 - 0.20 % Nb, 0.015 - 0.05 % Si, 0.09 - 0.16 % O, and for all alloys contents of impurities normally occurring in reactor grade zirconium.

When manufacturing the cladding tube, this shall be heat-treated in such a way that the cumulative annealing parameter attains a low value, preferably lower than 1.25 x 10⁻¹⁴, for Q/R = 31726 K. To obtain a low value of the annealing parameter, the heat treatments between the cold-rolling stages are to be carried out at low temperatures, below 650°C and preferably below 600°C.

By manufacturing cladding tubes with a special composition according to the above and with a low cumulative annealing parameter, cladding tubes for PWR fuel can be manufactured in a simpler manner and high heat-treatment temperatures and long heat treatments need not be utilized.

A fuel element whose cladding combines good corrosion resistance and low hydrogen absorption can be used for higher burnups with a reduced risk of oxide scaling forming on the cladding and of high hydrogen contents entailing unfavourable embrittlement of the cladding.

It has also proved possible to improve the guide tubes by making them from an alloy with the composition according to what has been stated above for cladding tubes and that the guide tubes during manufacture are heat-treated in such a way as has been described above for cladding tubes.

A fuel element according to the invention may comprise guide tubes and fuel rods, the claddings of which are manufactured according to the method described above, or the fuel element may comprise fuel rods whose claddings are manufactured according to the method described above whereas the guide tubes are manufactured in a different way.

### Example 1

A nuclear fuel element for a PWR comprises a lattice of 17 x 17 fuel rods. The fuel rods comprise fuel pellets enclosed in a sealed cladding tube. The cladding is manufactured in such a way that the cumulative annealing parameter is lower than 1.25 x 10⁻¹⁴, for Q/R = 31726 K. During manufacture of cladding tubes for fuel elements according to the invention, conventionally the starting material is a forging of a zirconium alloy comprising 1.2 - 1.7% Sn, 0.18 - 0.24% Fe, 0.07 - 0.13% Cr, 0.16 - 0.40% Ni, 0.015 - 0.20% Nb, 0.002 -0.05% Si, 0.09 - 0.20% O, the balance being zirconium with impurities normally occurring in reactor grade zirconium.

The forging is treated, beta-quenched and extruded in conventional manner. After extrusion, the tube is machined in four cold-rolling operations into the desired final dimension. Between all cold-rolling operations, the tube undergoes intermediate annealing at 500°C for 1, hour and after the last cold rolling a final annealing is performed at 460°C for 1.5 hours. The manufacture described gives a cumulative annealing parameter of 5 x 10⁻¹⁸.

### Example 2

A nuclear fuel element for a PWR comprises fuel rods whose cladding is manufactured from Zircaloy-2. The cladding is manufactured by cold-rolling the tube, after extrusion, in six stages until the final dimension is attained and with intermediate annealings at 625°C for 6 hours. After the last cold rolling, the cladding tube is finally heat-treated at 540°C for 4 hours. The cumulative annealing parameter of the cladding tube is 1.25 x 10⁻¹⁴.

## Claims

1. A method for manufacturing cladding tubes and guide tubes or only cladding tubes for nuclear fuel elements intended for a pressurized-water reactor, PWR, comprising extrusion of a tube blank, cold rollings, with intermediate heat treatments, until the final dimension is attained, and a final heat treatment after the last cold rolling, wherein the cumulative annealing parameter ∑A = ∑ tᵢ exp (-Q/RTᵢ) is at most 1.25 x 10⁻¹⁴, at Q/R = 31726 K, and that the cladding tube and the guide tube or only the cladding tube is/are manufactured from Zircaloy-2 or from a zirconium alloy with 1 -2.0% Sn, 0.07 - 0.70% Fe, 0.05 - 0.15% Cr, 0.06 - 0.40% Ni, 0.015 - 0.20% Nb, 0.090.16% O, or an alloy with 1 - 2.0% Sn, 0.07 - 0.70% Fe, 0.05 - 0.15% Cr, 0.16 - 0.40% Ni, 0.015 - 0.20% Nb, 0.015 - 0.05% Si, 0.09 - 0.16% O, and for all alloys balance zirconium with contents of impurities normally occurring in reactor grade zirconium.

2. A method according to claim 1, **characterized in** that the cladding tube and the guide tube or only the cladding tube when being manufactured, after the extrusion of a tube blank, is/are heat-treated between cold rolling operations at temperatures below 650°C and preferably below 600°C.

3. A method according to claim 1 or 2, **characterized in** that the cladding and the guide tube or only the cladding tube is/are finally heat-treated at 400 to 600°C.

## Patentansprüche

1. Herstellungsverfahren für Mantelrohre und Führungsrohre oder lediglich Mantelrohre für Kernbrennstäbe eines Druckwasserreaktors PWR mit Strangpressen eines Rohrrohlings, Kaltwalzen, zwischenzeitlichen Wärmebehandlungen zum Erreichen des endgültigen Maßes und einer abschliessenden Wärmebehandlung nach dem letzten Kaltwalzen, wobei der gesamte Ausglühparameter ∑A = ∑tᵢ exp(-Q/RTᵢ ) höchstens 1,25 x 10⁻¹⁴ für Q/R = 31726 K beträgt, und daß das Mantelrohr und das Führungsrohr oder lediglich das Mantelrohr aus Zircaloy-2 hergestellt ist (sind) oder aus einer Zirkoniumlegierung mit 12,0 % Sn; 0,07 - 0,70 % Fe; 0,05 - 0,15 % Cr; 0,06 - 0,40 % Ni; 0,015 - 0,20 % Nb; 0,090,16 % O, oder einer Legierung mit 1 - 2 *%* Sn; 0,07 - 0,70 % Fe; 0,05 - 0,15 % Cr; 0,160,40 % Ni; 0,015 - 0,20 % Nb; 0,015 - 0,05 % Si; 0,09 - 0,16 % O und für sämtliche Legierungen mit einem Zirkoniumrest mit Verunreinigungsspuren, wie sie gewöhnlicherweise für reaktor -angepaßtes Zirkonium vorliegen.

2. Verfahren gemäß Patentanspruch 1, **dadurch gekennzeichnet**, daß das Mantelrohr und das Führungsrohr oder lediglich das Mantelrohr während der Herstellung nach dem Strangpressen eines Rohrrohlings zwischen den Kaltwalzmomenten bei Temperaturen unter 650° C, vorzugsweise unter 600° C, wärmebehandelt wird (werden).

3. Verfahren gemäß Patentanspruch 1 oder2, **dadurch gekennzeichnet**, daß das Mantelrohr und das Führungsrohr oder lediglich das Mantelrohr bei 400° bis 600° C abschliessend wärmebehandelt wird (werden).

## Revendications

1. Procédé de fabrication de tubes de gainage et de tubes guides ou seulement de tubes de gainage pour des éléments combustibles nucléaires destinés à un réacteur à eau sous pression, PWR, qui consiste à extruder une ébauche de tube, à effectuer des laminages à froid avec des traitements thermiques intermédiaires jusqu'à ce que la dimension finale soit atteinte et un traitement thermique final après le dernier laminage dans lequel le paramètre cumulatif de recuit ∑A = ∑ tᵢ exponentiel (-Q/RTᵢ) est au plus de 1,25 x 10⁻¹⁴, à Q/R = 31726 K, et en ce que le tube de gainage et le tube guide ou seulement le tube de gainage est/sont fabriqués en Zircaloy-2 ou en un alliage de zirconium ayant de 1 à 2,0 % de Sn, de 0,07 à 0,70 % de Fe, de 0,05 à 0,15 % de Cr, de 0,06 à 0,40 % de Ni, de 0,015 à 0,20 % de Nb, de 0,09 à 0,16 % de O, ou en un alliage ayant de 1 à 2,0 % de Sn, de 0,07 à 0,70 % de Fe, de 0,05 à 0,15 % de Cr, de 0,16 à 0,40 % de Ni, de 0,015 à 0,20 % de Nb, de 0,015 à 0,05 % de Si, de 0,09 à 0,16 % de O, et pour tous les alliages le solde étant du zirconium ayant des teneurs en impuretés se produisant normalement dans du zirconium de qualité pour réacteur.

2. Procédé suivant la revendication 1, caractérisé en ce que le tube de gainage et le tube guide ou seulement le tube de gainage est/sont, lorsqu'ils sont fabriqués après l'extrusion d'une ébauche de tube, traités thermiquement entre les opérations de laminage à froid à des températures inférieures à 650°C et, de préférence, inférieures à 600°C.

3. Procédé suivant la revendication 1 ou 2, caractérisé en ce que le tube de gainage et le tube guide ou seulement le tube de gainage est/sont traités thermiquement finalement entre 400 et 600°C.
